# DEMANDE DE BREVET EUROPEEN

(11) **EP 0 865 184 A1**
(43) Date de publication de la demande: **16.09.1998**
(21) Numéro de dépôt: 98200692.6
(22) Date de dépôt: 04.03.1998
(51) Int. Cl.: H04M 1/02

(54) **Appareil électronique avec deux faces utiles, muni d'un moyen de protection.**

(30) Priorité: 11.03.1997 FR 9702865
(71) Demandeur: Koninklijke Philips Electronics N.V., 5621 BA Eindhoven (NL)
(72) Inventeur: Johansson, Pernilla, Société Civile S.P.I.D., 75008 Paris (FR)
(74) Mandataire: Caron, Jean

(57) **Abrégé**

L'appareil peut être constitué par l'accouplement de deux appareils dont chacun possède une face principale avec un clavier de touches ou un afficheur, les faces principales se tournant le dos. Il peut aussi s'agir d'un appareil monobloc possédant deux faces utiles qui se tournent le dos.

Il comporte une languette de protection souple ou articulée, attachée par une de ses extrémités à l'appareil, de telle façon qu'elle est capable de couvrir au choix une des faces principales ou l'autre face principale.
Applications : calculatrices, téléphones, récepteurs d'appel, boîtiers de télécommande, organiseurs et autres appareils de calcul et de communication.

## Description

La présente invention concerne un appareil électronique, possédant une face principale munie de moyens de liaison avec un utilisateur, tels qu'un clavier de touches et/ou un afficheur, appareil auquel est susceptible d'être attaché un second appareil possédant lui aussi une face principale munie de moyens de liaison avec un utilisateur, et qui, lorsqu'un second appareil lui est attaché, constitue un appareil combiné dont les deux faces principales se tournent le dos. L'invention concerne aussi un appareil monobloc, possédant deux faces principales qui se tournent le dos et sont munies chacune de moyens de liaison avec un utilisateur, tels qu'un clavier de touches et/ou un afficheur.

Un appareil possédant deux faces principales munies de moyens de liaison avec un utilisateur, tels qu'un clavier de touches et/ou un afficheur, est connu du document PCT WO 93/12604. Selon ce document, un téléphone possédant une face principale munie de moyens de liaison avec un utilisateur est associé avec un calculateur possédant lui aussi une face principale munie de moyens de liaison avec un utilisateur. Ces deux appareils forment ensemble un appareil combiné unique, dont les deux faces principales se tournent le dos.

L'invention se propose d'améliorer la protection de l'appareil.

A cet effet, l'appareil est muni d'une languette de protection souple ou articulée qui est attachée, par une de ses extrémités, à l'appareil, de telle façon que, dans un appareil combiné, cette languette est susceptible de couvrir au moins en partie la face principale du premier appareil ou la face principale du second appareil.

Dans le cas d'un appareil monobloc, l'appareil est muni d'une languette de protection souple ou articulée qui est attachée, par une de ses extrémités, à l'appareil, de telle façon que cette languette est susceptible de couvrir au moins en partie l'une ou l'autre des faces principales de l'appareil.

Lorsqu'un utilisateur se sert de l'une quelconque des deux faces, une telle languette permet de protéger l'autre face utile, qui est par exemple appuyée sur une table ou un autre support.

Dans le cas de deux appareils combinés, le premier appareil est avantageusement un organiseur personnel muni de moyens pour recevoir, comme second appareil, un téléphone mobile, ou bien le premier appareil est un téléphone mobile muni de moyens pour recevoir, comme second appareil, un organiseur personnel.

La combinaison d'un téléphone mobile avec un autre appareil, notamment un organiseur, est intéressante, puisque par exemple l'organiseur permet d'enregistrer immédiatement des renseignements obtenus par téléphone.

Dans ce cas, la languette de protection comporte avantageusement des ouvertures qui sont situées en regard d'un écouteur et d'un microphone lorsque la languette recouvre la face principale d'un téléphone.

Ainsi on peut utiliser le téléphone même lorsqu'il est recouvert par la languette.

Dans un mode de réalisation particulier, la languette est munie de moyens d'immobilisation à son autre extrémité, ces moyens comprenant, dans un mode de réalisation, au moins un aimant fixé à la languette et une pièce magnétique fixée à l'appareil, ou vice-versa, et dans un autre mode de réalisation, des bandes susceptibles de s'agripper l'une à l'autre connues sous le nom "velcro".

Il est utile de prévoir une partie centrale de la languette rigide.

Ainsi, lors de l'utilisation d'une face, une pression non désirée sur une touche de l'autre face est évitée.

Ces aspects de l'invention ainsi que d'autres aspects plus détaillés apparaîtront plus clairement grâce à la description suivante d'un mode de réalisation constituant un exemple non limitatif.

La figure 1 représente en coupe un ensemble électronique combiné formé de deux appareils.

La figure 2 est une vue latérale d'un ensemble électronique combiné avec une languette de protection, illustrant deux positions de la languette.

La figure 3 comprend une vue frontale, une vue de dessus, et une vue de dessous d'un ensemble électronique combiné avec une languette de protection.

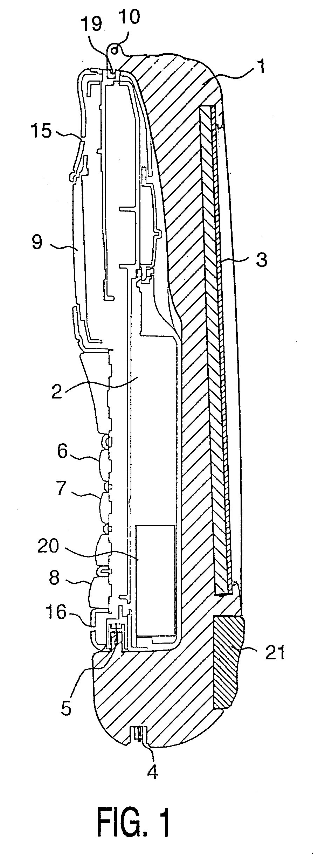

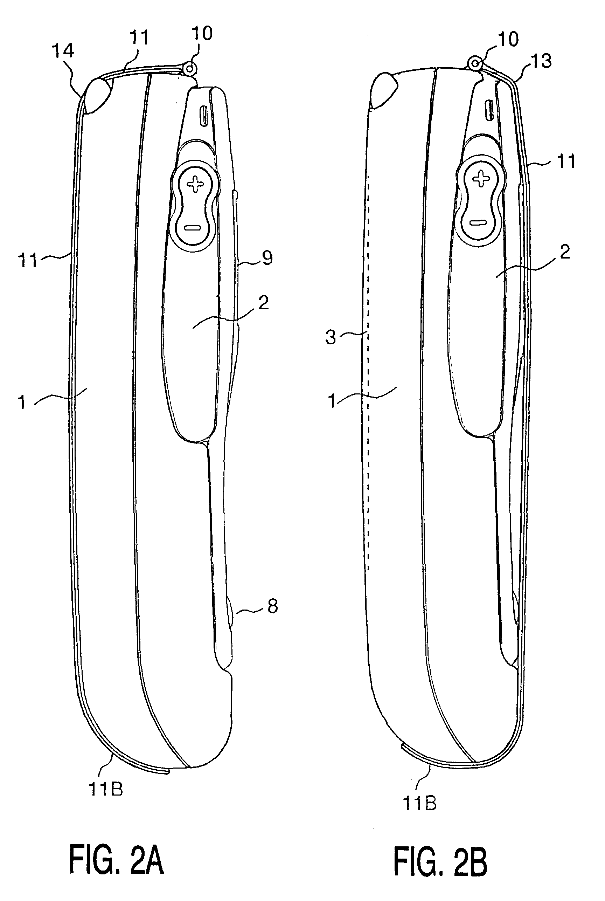

L'ensemble de la figure 1 comprend un appareil électronique 1 qui est ici, à titre d'exemple, du type connu sous le nom d'organiseur personnel. Il possède une face principale munie de moyens de liaison avec un utilisateur, ici un écran d'affichage 3, muni de zones sensitives permettant à l'utilisateur d'entrer des informations en touchant l'écran, et aussi d'un organe de pointage 21 du genre connu sous le nom "track-ball". La référence 10 indique une charnière dont le rôle sera décrit à propos de la figure 2. A cet appareil est attaché un second appareil 2 qui est ici un téléphone mobile, et qui possède une face principale munie de moyens de liaison avec un utilisateur, à savoir un écran 9 et des touches 6, 7, 8. Les faces principales des deux appareils 1 et 2 se tournent le dos.

Un tel appareil est décrit à titre d'exemple, mais n'importe quel autre appareil, notamment monobloc, possédant deux faces principales munies de moyens de liaison avec un utilisateur, tels que clavier de touches et/ou afficheur, par exemple un boîtier de télécommande sophistiqué pour un magnétoscope, est également susceptible de comprendre les moyens décrits ci-après.

Sur la figure 2, l'appareil est muni d'une languette de protection 11, par exemple en cuir ou en matière plastique souple, attachée ici par une de ses extrémités, au moyen d'une charnière 10, à l'extrémité supérieure de l'appareil. Cette languette est susceptible de couvrir, au moins en partie, la face tournée vers la gauche, ainsi que cela est représenté en A, ou, en retournant la languette, la face tournée vers la droite, ainsi que cela est représenté en B. La languette est munie de moyens d'immobilisation, c'est-à-dire de fixation à l'appareil, à son autre extrémité 11B, en bas ici. La languette pourrait aussi prendre la forme d'un rideau monté sur un enrouleur, ce dernier éventuellement situé dans le corps de l'appareil.

Il est clair que le terme languette pourrait aussi désigner un organe relativement rigide, une sorte de lame par exemple en matière plastique, qui serait alors articulée, ou comprendrait une partie intermédiaire souple, au niveau des pliages 13 ou 14.

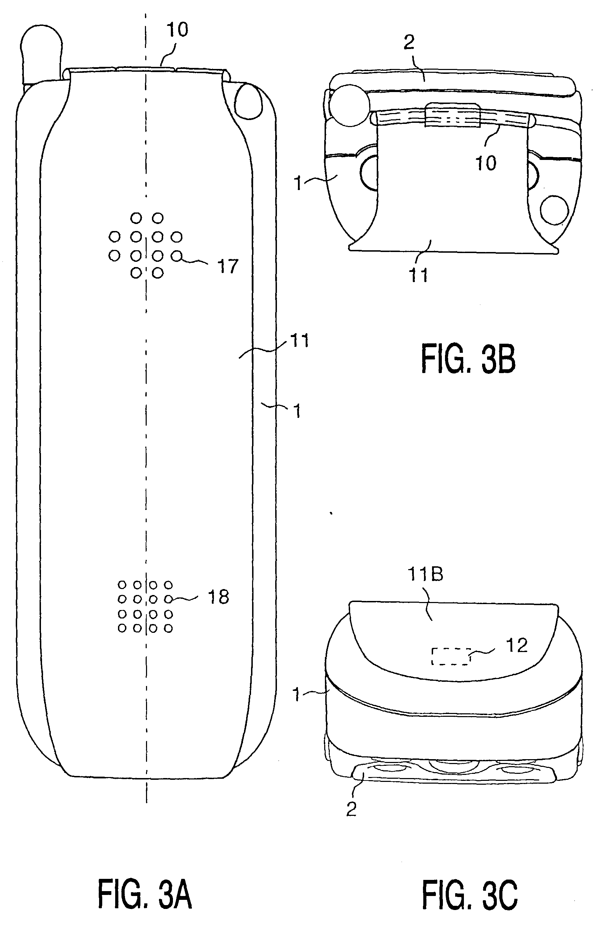

La figure 3 illustre encore le même ensemble d'appareils, avec un autre point de vue. La figure 3A montre surtout la partie centrale de la languette 11, recouvrant l'appareil. Cette partie centrale de la languette peut être rendue plus rigide, de façon à protéger les touches d'une pression involontaire. La languette comporte des ouvertures 17, 18 qui sont situées en regard de l'écouteur et du microphone du téléphone.

La figure 3B montre surtout l'extrémité de la languette 11 attachée par la charnière 10 à l'appareil 1. La figure 3C montre surtout l'autre extrémité 11B de la languette avec les moyens d'immobilisation, qui comprennent ici un aimant 12 fixé à la languette (ou dans l'appareil) et une pièce magnétique non visible, fixée en correspondance dans l'organiseur personnel 1 (ou respectivement fixé à la languette).

Différentes variantes peuvent être envisagées, par exemple :
- les moyens d'immobilisation peuvent être constitués par des bandes susceptibles de s'agripper l'une à l'autre connues sous le nom "velcro";
- à la place de la charnière 10, un autre moyen d'attache connu peut être prévu
- la languette peut aussi être complètement amovible : la charnière peut être elle même détachable du corps de l'appareil, ou bien la languette peut être attachée par clipsage ou introduction avec glissement dans un support idoine ou, comme à l'autre extrémité 11B, par un système aimant/pièce magnétique, ou par des bandes susceptibles de s'agripper l'une à l'autre connues sous le nom "velcro".
- la languette peut être plus courte que sur la figure, à son extrémité 11B, la dite extrémité étant par exemple susceptible d'atteindre le bas de la face principale de chacun des appareils, et non plus le dessous du premier appareil. Dans ce cas il y aurait lieu de prévoir une pièce magnétique sur l'organiseur personnel et une autre sur le téléphone.

## Revendications

1. Appareil électronique, possédant une face principale munie de moyens de liaison avec un utilisateur, tels qu'un clavier de touches et/ou un afficheur, appareil auquel est susceptible d'être attaché un second appareil possédant lui aussi une face principale munie de moyens de liaison avec un utilisateur, et qui, lorsqu'un second appareil lui est attaché constitue un appareil combiné dont les deux faces principales se tournent le dos, **caractérisé en ce qu**'il est muni d'une languette de protection souple ou articulée qui est attachée, par une de ses extrémités, à l'appareil, de telle façon que cette languette est susceptible de couvrir au moins en partie, lorsqu'un second appareil est présent, la face principale du premier appareil ou la face principale du second appareil.

2. Appareil selon la revendication 1, **caractérisé en ce qu**e le premier appareil est un organisateur personnel, et il est muni de moyens pour recevoir, comme second appareil, un téléphone mobile.

3. Appareil selon la revendication 1, **caractérisé en ce qu**e le premier appareil est un téléphone mobile, et il est muni de moyens pour recevoir, comme second appareil, un organiseur personnel.

4. Appareil selon l'une des revendications 2 ou 3, **caractérisé en ce qu**e la languette comporte des ouvertures qui sont situées en regard d'un écouteur et d'un microphone lorsque la languette de protection recouvre la face principale d'un téléphone.

5. Appareil électronique, possédant deux faces principales qui se tournent le dos et sont munies chacune de moyens de liaison avec un utilisateur, tels qu'un clavier de touches et/ou un afficheur, **caractérisé en ce qu**'il est muni d'une languette de protection souple ou articulée qui est attachée, par une de ses extrémités, à l'appareil, de telle façon que cette languette est susceptible de couvrir au moins en partie l'une ou l'autre des faces principales de l'appareil.

6. Appareil selon une quelconque des revendications 1 à 5, **caractérisé en ce qu**e la languette de protection est munie de moyens d'immobilisation à son autre extrémité.

7. Appareil selon la revendication 6, **caractérisé en ce qu**e les moyens d'immobilisation comprennent au moins un aimant fixé à la languette de protection et une pièce magnétique fixée à l'appareil, ou vice-versa.

8. Appareil selon la revendication 6, **caractérisé en ce qu**e les moyens d'immobilisation sont constitués par des bandes susceptibles de s'agripper l'une à l'autre connues sous le nom "velcro"

9. Appareil selon une quelconque des revendications 1 à 8, **caractérisé en ce qu'**une partie centrale de la languette est rigide.
